# EUROPÄISCHE PATENTSCHRIFT

(11) **EP 0 367 814 B1**
(45) Veröffentlichungstag und Bekanntmachung des Hinweises auf die Patenterteilung: **14.07.1993**
(21) Anmeldenummer: 89905089.2
(22) Anmeldetag: 28.04.1989
(51) Int. Cl.: G01B 11/26, G01S 5/16

(54) **VORRICHTUNG ZUM FESTSTELLEN DER RELATIVEN LAGE EINER BEZUGSACHSE EINES OBJEKTS BEZÜGLICH EINES REFERENZSTRAHLS, INSBESONDERE EINES LASERSTRAHLS**
DEVICE FOR FINDING THE RELATIVE POSITION OF THE REFERENCE AXIS OF AN OBJECT RELATIVE TO A REFERENCE BEAM, A LASER BEAM IN PARTICULAR
DISPOSITIF POUR DETERMINER LA POSITION RELATIVE DE L'AXE DE REFERENCE D'UN OBJET PAR RAPPORT A UN RAYON DE REFERENCE, EN PARTICULIER UN RAYON LASER

(30) Priorität: 28.04.1988 DE 3814466
(43) Veröffentlichungstag der Anmeldung: 16.05.1990
(73) Patentinhaber: PRÜFTECHNIK DIETER BUSCH AG, 85737 Ismaning (DE)
(72) Erfinder: BUSCH, Dieter, D-8045 Ismaning (DE); LYSEN, Heinrich, D-8000 München 40 (DE)
(74) Vertreter: Hieke, Kurt
(86) Internationale Anmeldenummer: EP8900476
(87) Internationale Veröffentlichungsnummer: WO8910535

(56) Entgegenhaltungen:
- DE-A- 3 710 068
- DE-A- 4 714 776
- US-A- 3 562 537
- APPLIED OPTICS, vol. 23, Nr. 8, April 1984, Optical Society of America (New York, US), K. Sato et al: "Optical method of measuring angular displacement when the axis of rotation inclines", pages 1255-1257

## Beschreibung

Die Erfindung bezieht sich auf eine Vorrichtung gemäß dem einleitenden Teil des Patentanspruchs 1.

Bei den bekannten Vorrichtungen dieser Art wird der Teilstrahl unter einem rechten Winkel zum einfallenden primären Referenzstrahl abgezweigt. Bei der bekannten Vorrichtung, die im Meßkopf eines Industrieroboters für dessen lasergeführte Steuerung untergebracht ist (DE-A-3 710 068), dient der Positionsdetektor, auf den der den Teilerspiegel geradlinig durchquerende Referenzstrahl einfällt, der Ermittlung von Verlagerungen des Meßkopfes senkrecht zum Referenzstrahl, während der andere Positionsdetektor, auf den der rechtwinklig abgezweigte Teilstrahl einfällt, den Zweck erfüllt, Signale zu liefern, die zu der Drehung des Meßkopfes um den Referenzstrahl proportional sind. Eine in den Strahlengang des Referenzstrahls eingefügte Vergrößerungslinse ist so bemessen, daß sie eine Vergrößerung der X-Richtung und der Y-Richtung auf dem erstgenannten Positionsdetektor bewirkt, und die Abstände der beiden Positionsdetektoren vom Teilerspiegel sind verschieden groß eingerichtet, wobei der vom Referenzstrahl getroffene Positionsdetektor nahe beim Teilerspiegel angeordnet ist und der andere Positionsdetektor hiervon senkrecht zum Referenzstrahl einen wesentlich größeren Abstand aufweist.

Die Folge ist, daß die bekannte Vorrichtung einen großen Raumbedarf in Richtung senkrecht zum Laserstrahl aufweist.

Der Erfindung liegt die Aufgabe zugrunde, eine Vorrichtung gemäß dem einleitenden Teil des Patentanspruchs 1 zu schaffen, die einen wesentlich geringeren Raumbedarf hat als die bekannten Vorrichtungen und dennoch eine große wirksame Längendifferenz für die Abstände zwischen den Meßstellen auf dem Meßobjekt aufweist, so daß sie mit großem Auflösungsvermögen und großer Genauigkeit für die Feststellung sowohl von Parallelversätzen als auch von Winkelversätzen der Bezugsachse des Meßobjekts bezüglich des Referenzstrahls eingesetzt werden kann.

Die vorstehende Aufgabe wird durch die im kennzeichnenden Teil des Patentanspruchs 1 genannten Merkmale gelöst.

Bei der erfindungsgemäßen Vorrichtung wird durch die mit der besonderen Art der zweifachen Spiegelung des abgezweigten Teilstrahls bewirkte Faltung desselben bei optimal geringem Platzbedarf für die Vorrichtung schon geometrisch ein erheblich vergrößerter Abstand zwischen den Meßstellen am Objekt, nämlich der direkten Meßstelle im Strahlengang des Referenzstrahls und der virtuellen Meßstelle im Strahlengang des Teilstrahls, erreicht und diese Längendifferenz wird durch die speziell auf diesen Zweck abgestimmte Bemessung der Vergrößerungsoptik noch auf optischem Wege vergrößert.

Ein besonderes kompakter und auch störungssicherer Aufbau der erfindungsgemäßen Vorrichtung wird gemäß Patentanspruch 3 dadurch erreicht, daß die Sammeloptik mit dem Teilerspiegel und dem Umlenkspiegel sowie mit den Positionsdetektoren zu einer Kompaktglasoptik verklebt wird, wofür die Sammeloptik zur optischen Vergrößerung des Meßstellenabstandes eingangsseitig von der Kompaktglasoptik , also bereits vor dem Teilerspiegel, in den Strahlengang des Referenzstrahls eingebaut wird.

Drehungen der Vorrichtung um die Achse des Referenzstrahls sowie der Abstand der Vorrichtung vom Strahlungssender können bei der erfindungsgemäßen Vorrichtung gemäß Patentanspruch 4 dadurch erfaßt werden, daß der Strahlungssender zwei einen spitzen Winkel miteinander einschließende Referenzstrahlen so zum Objekt aussendet, daß beide auf die Positionsdetektoren einfallen. Die Trennung der beiden Durchstoßpunkte der auf jeden Detektor einfallenden beiden Referenzstrahlen kann bei entsprechender Wahl der Positionsdetektoren diesen überlassen werden. Besonders Vorteilhaft ist es jedoch, den Strahlungssender so einzurichten, daß er die beiden Referenzstrahlen im Wechsel aussendet, so daß einfachere zweiachsige Positionsdetektoren eingesetzt werden können (Anspruch 5).

Die Erfindung wird nachstehend anhand der Zeichnung an einem Ausführungsbeispiel noch näher erläutert. In der Zeichnung zeigt:
- Fig.1-Fig.3: schematische Darstellungen zur Erläuterung der prinzipiellen Arbeitsweise von Vorrichtungen der der Erfindung zugrundeliegenden Gattung,
- Fig. 4: eine perspektivische Darstellung zur Erläuterung des bei der erfindungsgemäßen Vorrichtung alternativ einsetzbaren Prinzips einer Messung mit zwei Referenzstrahlen,
- Fig. 5: in perspektivischer Darstellung eine praktische Ausführungsform der erfindungsgemäßen Vorrichtung, und
- Fig. 6a-6c: eine bei der erfindungsgemäßen Vorrichtung verwendbare Bauform eines Positionsdetektors.

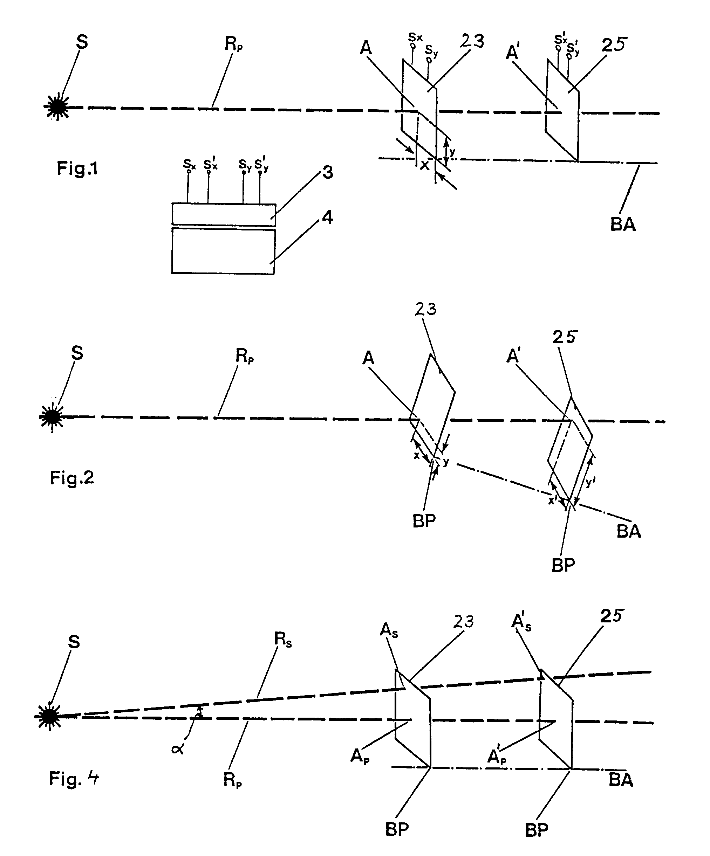

Gemäß Fig. 1- Fig. 5 sendet ein raumfester Strahlungssender S einen im wesentlichen parallel gebündelten primären Referenzstrahl Rₚ, vorzugsweise einen Laserstrahl, in solcher Richtung aus, daß dieser auf zwei in seiner Projektionsrichtung entweder körperlich oder virtuell im Abstand hintereinander angeordnete, in der Zeichnung schematisch durch Rechtecke wiedergegebene zweiachsige, optoelektronische Positionsdetektoren 23, 25 auftrifft. Die Positionsdetektoren sind starr an einem Objekt festgelegt, das eine feste Bezugsachse BA aufweist, deren Lage bezüglich des primären Referenzstrahls Rₚ hinsichtlich Parallelversatz und Winkelversatz und - unter Anwendung des Zweistrahl-Prinzips gemäß Fig. 4 - auch hinsichtlich ihrer Winkellage um den primären Referenzstrahl Rₚ festzustellen ist. Das Zweistrahl-Prinzip gemäß Fig. 4 ermöglicht zudem auch noch die Ermittlung der Entfernung des Objektes von einem festen Raumpunkt, z.B. dem Ort des Strahlungssenders S.

Das Objekt ist, da es auf dessen Einzelheiten nicht ankommt, in der Zeichnung nur mit seiner Bezugsachse BA wiedergegeben.

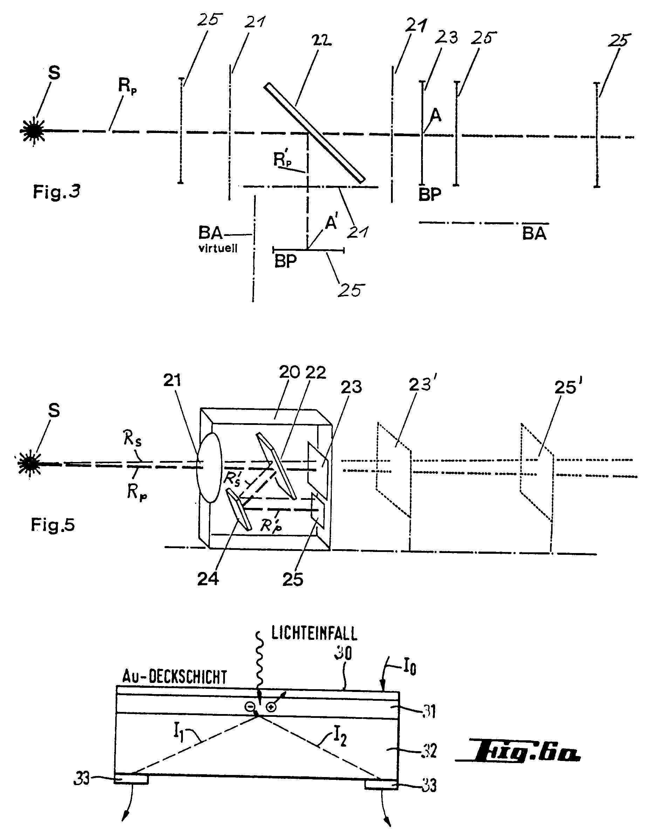

Die Positionsdetektoren 23, 25 sind in der Zeichnung schematisch durch Rechtecke angedeutet. In Fig. 1, 2 und 4 sind sie zum Zwecke der Erläuterung des grundsätzlichen Meßprinzips körperlich hintereinander dargestellt. Bei den praktischen Ausführungen der gattungsgemäßen Vorrichtungen befinden sie sich jedoch in Wirklichkeit, wie im Prinzip aus Fig. 3 ersichtlich, nur virtuell hintereinander, körperlich hingegen nicht.

Die Positionsdetektoren 23, 25 liefern gemäß Fig. 1 und 2 elektrische Signale, die der Größe und dem Vorzeichen im wesentlichen zueinander senkrechter, nur in Fig. 1 und Fig. 2 eingetragener Koordinaten x und y (Detektor 23) bzw. x' ,y' (Detektor 25) des Abstandes entsprechen, den der jeweilige Auftreffpunkt A,A' des primären Referenzstrahls Rₚ bzw. eines von diesem abgezeigten Teilstrahls Rₚ' (Fig.3) in der Detektorebene von einem Bezugspunkt BP in dieser aufweist. Die Lage der Bezugspunkte BP in der Detektorebene ist nach praktischen meßtechnischen Voraussetzungen willkürlich wählbar aber von vornherein festgelegt, also bekannt. Bei den der Erläuterung der prinzipiellen gattungsgemäßen Funktionsweise dienenden Fig. 1- Fig. 3 liegen die Bezugspunkte BP darstellungshalbar jeweils an der unteren vorderen Ecke der Positionsdetektoren 23,25, wobei ihre Verbindungslinie mit der objektfesten Bezugsachse BA zusammenfällt.

Die Positionsdetektoren 23,25 sind an dem die Bezugsachse BA aufweisenden Objekt so angeordnet, daß ihre Koordinatenachsen in der Projektionsrichtung des primären Referenzstrahls Rₚ fluchten.

Bei der in Fig. 1 zu sehenden Position der Bezugsachse BA haben die Auftreffpunkte A,A' des primären Referenzstrahls Rₚ auf den Positionsdetektoren 23,25 von dem jeweiligen Bezugspunkt BP nach Größe und Richtung den gleichen Abstand, so daß auch die Koordinate x der Koordinate x' und die Koordinate y der Koordinate y' entspricht und die Detektoren entsprechende Signale Sₓ, Sₓ', S_{y}, S_{y}' über einen passenden Signalwandler 3 an die Datenverarbeitungseinrichtung z.B. in Form eines handelsüblichen Computers liefern. Dieser Computer errechnet aus den Signalen nach Parallelversätzen in X und Y-Richtung und nach Gier- und Stampf-Winkelversatz getrennt oder nach anderen Kriterien die relative Lage der Bezugsachse BA des Objekts bezüglich des primären Referenzstrahls Rₚ sowie Werte für an vorgegebenen Montagepunkten des Objekts vorzunehmende Korrekturen zur Beseitigung eines korrekturbedürftigen Versatzes.

Die Anschlüsse Sₓ, S_{y}, Sₓ' und S_{y}' sowie der Computer 4 mit seinem Datenwandler 3 sind nur in Fig. 1 schematisch angedeutet, aber selbstverständlich auch im Zusammenhang mit den anderen Figuren mit gleicher Zweckbestimmung vorgesehen.

Die Fig. 2 zeigt gegenüber Fig. 1 eine andere relative Lage der Bezugsachse BA bezüglich des primären Referenzstrahls Rₚ, die sich durch Änderung der Lage des Objekts im Meßraum aus irgendwelchen Gründen , z.B. durch betriebsbedingte Beanspruchungen einer das Objekt bildenden Maschine, ergeben haben kann. Mit der Änderung der Lage der Bezugsachse BA hat sich auch die Lage der Positionsdetektoren 23,25 bezüglich des Referenzstrahls Rₚ und damit die Lage des jeweiligen Auftreffpunktes auf der Detektorebene geändert. Die Lageänderung ist in Fig. 2 vorwiegend eine Änderung der Winkellage. Selbstverständlich könnte es sich auch um einen reinen Parallelversatz , also eine gleichmäßige Abstandsänderung der Bezugsachse BA bezüglich des primären Referenzstrahls Rₚ oder um eine Kombination beider Versatzarten handeln. Es ist auch ersichtlich, daß Winkeländerungen sowohl in der Zeichenebene der Fig. 2 als auch senkrecht dazu, also sowohl ein Gier-Winkelversatz als auch ein Stampf-Winkelversatz, eine Änderung der Lage des Auftreffpunktes A bzw. A' auf mindestens einem der beiden Positionsdetektoren zur Folge hat. Mit einer Lageänderung eines Auftreffpunktes ergeben sich auch durch die damit einhergehende Änderung der Koordinaten x, y bzw x', y' entsprechende Änderungen der Signale Sₓ, S_{y} bzw. Sₓ', S_{y}', die der Computer bei bekannter Distanz der Positionsdetektoren 1 und 2 von der Strahlungsquelle S zu einer entsprechenden Aussage hinsichtlich der Lage der Bezugsachse BA im Meßraum und entsprechender Korrekturwerte zu bearbeiten vermag.

Die Anordnung der Positionsdetektoren 23 und 25 gemäß Fig. 1 und Fig. 2 körperlich hintereinander würde voraussetzen, daß der vordere Positionsdetektor 23 für den primären Referenzstrahl Rₚ zumindest teilweise durchlässig ist. Dies ist technisch z.Zt. nicht einfach zu realisieren. Daher werden bei gattungsgemäßen bekannten Vorrichtungen sowie auch bei der erfindungsgemäßen Vorrichtung nach Fig. 3 und 5 gewöhnliche lichtundurchlässige Positionsdetektoren 23, 25 in Verbindung mit der nachstehend anhand der Fig. 3 noch näher erläuterten, lediglich virtuellen Anordnung eines der beiden Positionsdetektoren in der Projektionsrichtung des primären Referenzstrahls Rₚ eingesetzt.

Gemäß Fig. 3 ist der Positionsdetektor 25 nur virtuell in Richtung des primären Referenzstrahls Rₚ hinter dem Positionsdetektor 23 angeordnet, körperlich hingegen außerhalb der vom Strahlsender S ausgehenden Projektionsrichtung. Der Positionsdetektor 23 ist körperlich in der vorgenannten Projektionsrichtung verblieben und, wie bei dem vorhergehend besprochenen Schema, mit seiner Detektorebene zum primären Referenzstrahl Rₚ im wesentlichen senkrecht angeordnet, wenn die Bezugsachse BA zu diesem parallel liegt.

Der Positionsdetektor 25 befindet sich an dem Objekt seitlich neben dem primären Referenzstrahl Rₚ, wobei seine Detektorebene auf derjenigen des Positionsdetektors 23 senkrecht steht und gegenüber der Position gemäß Fig. 1 um eine zur Zeichenebene der Fig. 3 senkrechte Achse gedreht ist.

Bevor der Referenzstrahl Rₚ den Positionsdetektor 23 erreicht, fällt er auf einen Strahlteiler 22, der aus ihm einen Teilstrahl Rₚ' abzweigt, der senkrecht auf die Detektorebene des Positionsdetektors 25 einfällt, wenn die Bezugsachse BA zu dem Referenzstrahl Rₚ parallel liegt. Der Auftreffpunkt A' des Referenzstrahls Rₚ' entspricht in einer vorgegebenen Fluchtungs-Ausgangsposition hinsichtlich seines Abstandes vom Bezugspunkt BP dem Auftreffpunkt des Referenzstrahls Rₚ auf den Positionsdetektor 23, so daß funktionell die gleichen Verhältnisse vorliegen, wie bei dem Schema nach Fig. 1.

Durch Einschaltung von optischen Linsen 21 vor dem Teilerspiegel 22 und/oder vor dem Positionsdetektor 23 und/oder vor dem Positionsdetektor 25 kann bei der erfindungsgemäßen Vorrichtung jede beliebige virtuelle Anordnung des Positionsdetektors 25 in der von der Strahlungsquelle S aus gehenden Projektionsrichtung des primären Referenzstrahls Rₚ, also entweder vor oder hinter dem Positionsdetektor 23, erreicht werden, wofür in Fig. 3 mit gestrichelten Linien drei Beispiele angegeben sind.

Durch entsprechende Gestaltung der Linsen 21 ist es auch möglich, die Detektorebenen, von der Strahlungsquelle S her gesehen, zu vergrößern und damit eine Meßbereichsanpassung zu erhalten.

Bei den Funktionsprinzipien gemäß Fig. 1 bis 3 wird die für den Rechner benötigte Kentnis der Entfernung der Positionsdetektoren 23,25 von der Strahlungsquelle S unabhängig von der Meßvorrichtung auf irgendeine Weise gewonnen.

Demgegenüber eröffnet das in Fig. 4 dargestellte, gemäß der Erfindung alternativ anwendbare Meßprinzip die weitere Möglichkeit, diese Kenntnis mit der gleichen Vorrichtung zu erlangen, mit der der Parallversatz und der Gier- und Stampf-Winkelversatz festellbar sind. Dies wird gemäß Fig. 4 dadurch ermöglicht, daß zusätzlich zu dem primären Referenzstrahl Rₚ noch ein sekundärer Referenzstrahl Rₛ in einem spitzen Winkel hierzu von der Strahlungsquelle S ausgesendet wird, wobei der Winkel und die Projektionsrichtung für die beiden Referenzstrahlen so ausgewählt sind, daß unter allen möglichen Lagen der Bezugsachse BA beide Referenzstrahlen auf die Detektorebene mindestens eines der Positionsdetektoren 1 und 2 auftreffen. Es ist ersichtlich, daß bei bekannten Winkel α zwischen den beiden Referenzstrahlen der jeweilige Abstand der beiden Auftreffpunkte Aₛ, Aₚ bzw. Aₛ', Aₚ' in der einen bzw. anderen Detektorebene ein Maß für die Distanz des betreffenden Positionsdetektors 23 bzw. 25 von der Strahlungsquelle S ist, also zum einen damit die für die Rechnung benötigte Kenntnis dieser Distanz erhalten werden kann und zum anderen auch Distanzänderungen der Positionsdetektoren von der Strahlungsquelle S erfaßbar sind. Darüber hinaus gestattet die sich in den Koordinaten x un y bzw. x' und y' jedes der beiden Auftreffpunkte ausdrückende Richtung des Abstandes zwischen den Auftreffpunkten in jeder Detektorebene auch eine Aussage über die Winkelposition bzw. den Drehwinkel der beiden, über das Objekt untereinander starr gekoppelten Detektoren und damit der Bezugsachse BP um den primären Referenzstrahl Rₚ und somit auch die Erfassung von Änderungen dieser Winkellage.

Die Fig. 5 zeigt schematisch eine praktische Ausführungsform der nach dem Prinzip der virtuellen Positionsdetektorflucht mit optischer Beeinflussung des wirksamen Detektorabstandes gemäß Fig. 3 arbeitenden und wahlweise auch nach dem Zweistrahlprinzip gemäß Fig. 4 betreibbaren Vorrichtung gemäß der Erfindung, die sich durch besonders kleine Abmessungen auszeichnet und dennoch wie eine Vorrichtung wirkt, die ihr gegenüber wesentlich größere Detektoren in einem bezüglich ihrer tatsächlichen Abmessungen sehr großen Abstand aufweist und demgemäß einen großen Meßbereich bei großer Winkel-Meßempfindlichkeit hat.

Bei der Vorrichtung gemäß Fig. 5 sendet ein Strahlungssender S einen primären Referenzstrahl Rₚ und einen sekundären Referenzstrahl Rₛ aus. Objektseitig weist die Vorrichtung einen starr an dem Objekt befestigbaren Meßteil 20 auf, in den die beiden Referenzstrahlen Rₚ, Rₛ durch eine Linse 21 hindurch eintreten. Im Meßteil 20 treffen sie zunächst auf den Teilerspiegel 22. Dieser läßt die Referenzstrahlen Rₚ, Rₛ geradlinig zu dem ersten Positionsdetektor 23 durch, dessen Detektorebene im wesentlichen senkrecht zu dem Referenzstrahl Rₚ ausgerichtet ist.

Die vom Teilerspiegel 22 aus den einfallenden Referenzstrahlen Rₚ, Rₛ abgezweigten Teilstrahlen Rₚ' und Rₛ' werden zu dem zweiten Positionsdetektor 25 geleitet, dessen Detektorebene etwa in der gleichen Ebene liegt wie diejenige des ersten Detektors 23. Zur Erzielung eines besonders großen virtuellen Abstandes zwischen den Positionsdetektoran 23 und 25 werden die Teilstrahlen Rₚ' und Rₛ' zunächst vom Teilerspiegel 22 schräg nach unten in Richtung entgegen der Einfallsrichtung der einfallenden Referenzstrahlen Rₚ, Rₛ gespiegelt und dann noch einmal an einem gewöhnlichen Umlenkspiegel 24, um geometrisch verlängert erst dann auf den Positionsdetektor 25 zu treffen, dessen Koordinatenachsen zu denjenigen des Positionsdetektors 23 im wesentlichen parallel liegen.

Die Linse 21 ist so gestaltet, daß die Positionsdetektoren 23 und 25 von dem Stahlungssender S her gesehen zum einen als gegenüber ihren tatsächlichen Abmessungen wesentlich vergrößerte und zum anderen als in einem bezüglich der Abmessungen im Meßteil 20 wesentlich größeren Abstand hintereinander angeordnete Detektoren 23', 25' in Erscheinung treten, auf die die Referenzstrahlen Rₚ, Rₛ in der von der Strahlungsquelle S ausgehenden Projektionsrichtung unmittelbar auftreffen.

Die einzelnen Bautelemente des Meßteils 20, d.h. die Vergrößerungsoptik 21, der Teilerspiegel 22, der Umlenkspiegel 24 und die Positionsdetektoren 23 und 25 sind zu einer stabilen, störungssicheren Kompaktglasoptik miteinander verklebt, die insbesondere auch eine Kondensation von Wasserdampf an den optisch aktiven Flächen ausschließt.

Mit der Ausführungsform gemäß Fig. 5 kann bei Abmessungen in der Größenordnung einer Zigarettenschachtel oder sogar kleiner mit größter Präzision die Lage eines Objektes bzw. einer festen Bezugsachse von diesem bezüglich des Referenzstrahls Rₚ ermittelt werden, und es können Lageänderungen gegenüber einer Ausgangsposition hinsichtlich der folgenden Komponenten gesondert festgestellt werden:
a) Parallelversatz in allen Richtungen,
b) Stampf-Winkelversatz,
c) Gier-Winkelversatz, und
d) Dreh-Winkelversatz.

Außerdem ist mit dieser Vorrichtung auch die Distanz der Detektoren von der Strahlungsquelle S und ein diesbezüglicher Versatz feststellbar.

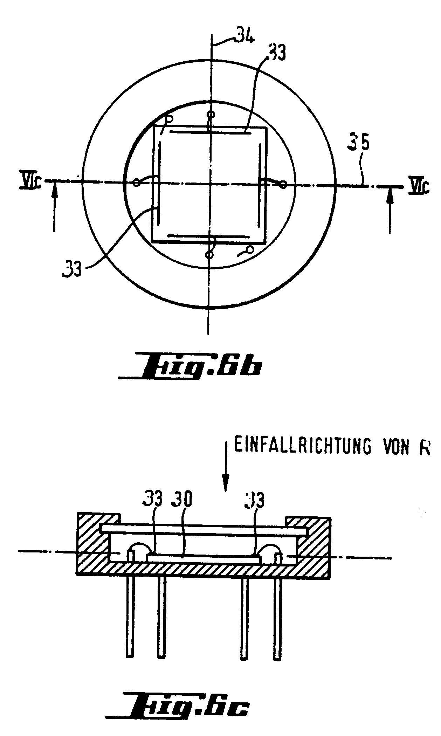

Da Positionsdetektoren in der einfachen Ausführungsform gemäß Fig. 6 in unerwünschter Weise hinsichtlich der beiden Auftreffpunkte Aₚ, Aₛ in jeder Detektorebene vermischte elektrische Ausgangssignale liefern würden, sendet der Strahlungssender S bei Verwendung solcher oder ähnlicher Detektoren bei der Vorrichtung gemäß Fig. 5 die Referenzstrahlen Rₚ, Rₛ abwechselnd in rascher Folge aus, so daß die Koordinaten der beiden Auftreffpunkte zeitlich nacheinander und damit gesondert als entsprechende elektrische Signale anfallen.

Die Figuren 6a - 6c dienen der Erläuterung der prinzipiellen Wirkungsweise einer bei der erfindungsgemäßen Vorrichtung verwendbaren Bauform eines analogen zweiachsigen photoelektronischen Halbleiter-Positionsdetektors.

Der Positionsdetektor gemäß Fig. 6a bis 6c weist eine Deckschicht 30 aus Gold, darunter eine Verarmungszone 31 und, wiederum darunter, ein hochohmiges Substrat 32 auf, wobei der Golddeckschicht 30 ein Strom Iₒ zugeführt wird und am Substrat seitlich sowie oben und unten Kontaktstreifen 33 entlang des im wesentlichen quadratischen Substratquerschnitts angeordnet sind , über die der zugeführte Strom Iₒ in Teilströme aufgeteilt abfließt. Die Aufteilung des Stromes Iₒ richtet sich nach der Stelle, an der ein Lichtstrahl auf die Gold-Deckschicht auftrifft. Bei der dargestellten Bauform wird der zugeführte Strom Iₒ in vier Teilströme aufgeteilt, die über die einzelnen Kontaktstreifen 33 abfließen und hinsichtlich ihrer Größe von dem Abstand abhängen, den der Lichtstrahlauftreffpunkt vom Zentrum hat. Wenn der Strahl also genau in die Mitte der mit der Verarmungszone und dem Substrat deckungsgleichen , quadratischen Gold-Deckschicht auftrifft, sind die vier Teilströme untereinander gleich groß. Aus einer eventuellen Stromdifferenz an den in Bezug aufeinander gegenüberliegenden Paaren von Kontaktstreifen 33 sind die rechtwinkligen Komponenten des Abstandes eines außermittigen Lichtstrahl-Auftreffpunktes von der Koordinatenmitte ablesbar.

Positionsdetektoren der vorstehend geschilderten Art sind neben anderen grundsätzlich geeigneten Bauformen bekannt und im Handel erhältlich.

## Patentansprüche

1. Vorrichtung zum Feststellen der relativen Lage einer Bezugsachse (BA) eines Objekts bezüglich eines zu diesem gerichteten, parallel gebündelten, raumfesten Referenzstrahls (Rₚ) einer elektromagnetischen Strahlung, insbesondere eines Laserstrahls, mit
a) einem raumfesten Strahlungssender für den Referenzstrahl (Rp),
b) einer an dem Objekt befestigbaren Positionsdetektoreinrichtung, die zwei zweiachsige, optoelektronische Positionsdetektoren (23,25) aufweist, die jeweils einer anderen von zwei sich zumindest virtuell in der Projektionsrichtung des Referenzstrahls (Rp) im Abstand hintereinander befindenden Meßstellen auf dem Objekt zugeordnet sind und elektrische Signale liefern, die der Größe und dem Vorzeichen zueinander senkrechter Koordinaten (x,y,x',y')-des Abstandes entsprechen, den der Auftreffpunkt (A.A') des Referenzstrahls (Rₚ) in der jeweiligen Detektorebene von einem Bezugspunkt in dieser aufweist, und
c) einer den beiden Positionsdetektoren (23,25) zugeordneten elektronischen Datenverarbeitungseinrichtung (3,4) zum Errechnen der relativen Lage der Bezugsachse (BA) des Objekts bezüglich der Mittelachse des Referenzstrahls (Rₚ) aus den von den Positionsdetektoren (23,25) gelieferten Signalen, wobei
d) in dem Strahlengang des Referenzstrahls (Rp) ein bezüglich der Positionsdetektoren (23,25) ortsfester Teilerspiegel (22) angeordnet ist, der aus dem sich geradlinig zu dem einen Positionsdetektor (23) fortsetzenden Referenzstrahl (Rₚ) einen Teilstrahl (Rₚ') abzweigt, der auf den anderen Positionsdetektor (25) gerichtet ist, und in dem Strahlengang zwischen dem Strahlungssender (S) und dem anderen Positionsdetektor (25) an der Positionsdetektoreinrichtung ortsfest eine Optik (21) angeordnet ist,
**dadurch gekennzeichnet**, daß
e) die Positionsdetektoren (23,25) so angeordnet sind, daß sich ihre Detektorebenen im wesentlichen in gleicher Ebene nebeneinander befinden,
f) der abgezweigte Teilstrahl (Rₚ') zunächst vom Teilerspiegel (22) mit einer Komponenete entgegen der Richtung des ankommenden Referenzstrahls (Rₚ) seitwärts und dann mittels eines bezüglich der Positionsdetektoren (23,25) ortsfesten Umlenkspiegels (24) zurück zum anderen Positionsdetektor (25) gespiegelt ist, und
g) die Optik so gestaltet ist, daß der andere Positionsdetektor (25) von dem Strahlungssender (S) her gesehen sich mit einem wesentlich größeren Abbildungsmaßstab als der eine Positionsdetektor (23) darstellt und in einem gegenüber der geometrischen Längendifferenz der Strahlengänge vom Teilerspiegel zu den Positionsdetektoren (23,25) wesentlich vergrößerten Abstand in Strahlrichtung von dem einen Positionsdetektor (23) entfernt angeordnet erscheint.

2. Vorrichtung nach Anspruch 1, **dadurch gekennzeichnet,** daß die Optik (21) vor dem Teilerspiegel (22) angeordnet ist.

3. Vorrichtung nach Anspruch 1 oder 2, **dadurch gekennzeichnet,** daß die Optik (21) mit dem Teilerspiegel (22), dem Umlenkspiegel (24) und den Positionsdetektoren (23,25) zu einer Kompaktglasoptik verklebt ist.

4. Vorrichtung nach einem der vorhergehenden Ansprüche, **dadurch gekennzeichnet,** daß der Strahlungssender (S) dafür eingerichtet ist, zwei im wesentlichen parallel gebündelte Referenzstrahlen (Rₚ, Rₛ) mit einem gegenseitigen spitzen Winkel (α) so zum Objekt auszusenden, daß beide Referenzstrahlen (Rₚ, Rₛ) in die Positionsdetektoren (23,25) einfallen.

5. Vorrichtung nach Anspruch 4, **dadurch gekennzeichnet,** daß der Strahlungssender (S) dafür eingerichtet ist, die beiden Referenzstrahlen (Rₚ, Rₛ) wechselweise auszusenden.

## Claims

1. Device for ascertaining the relative position of a reference axis (BA) of an object relative to a spatially fixed and substantially parallelly focussed reference beam (Rₚ) of an electromagnetic radiation, in particular of a laser beam, directed thereto with
a) a spatially fixed radiation transmitter for the reference beam (Rₚ),
b) a position detector equipment, which is fastenable at the object and displays two biaxial opti-electronic position detectors (23, 25), which are each respectively associated with a different one of two measurement points on the object, which are situated one behind the other at least virtually in the direction of projection of the reference (Rₚ), and supply electrical signals which correspond to the magnitude and the sign of mutually perpendicular co-ordinates (x, y, x' , y') of the spacing which the point of incidence (A, A') of the reference beam (Rₚ) in the respective detector plane displays from a reference point therein, and
c) an electronic data processing equipment (3, 4), which is associated with both the position detectors (23, 25) and for the computation of the relative position of the reference axis (BA) of the object with respect to the centre line of the reference beam (Rₚ) from the signals supplied by the position detectors (23, 25), wherein
d) a splitting mirror (22), which is of fixed location with respect to the position detectors (23, 25), is arranged in the beam path of the reference beam (Rₚ) and branches off a partial beam (Rₚ'), which directed towards the other position detector (25), from the reference beam (Rₚ) continuing rectilinearly to the one position detector (23) and an optical system (21) is arranged at the position detecting equipment and in fixed location in the beam path between the radiation transmitter (S) and the other position detector (25),
characterised thereby, that
e) the position detectors (23, 25) are so arranged that their detector planes are disposed one beside the other in substantially the same plane,
f) the branched-off partial beam (Rₚ') is initially reflected by the splitting mirror (22) laterally with a component against the direction of the arriving reference beam (Rₚ) and then reflected by means of a deflecting mirror (24), which is of fixed location with respect to the position detectors (23, 25) back to the other position detector (25) and
g) the optical system is so structured that the other position detector (25), as seen from the radiation transmitter (S), presents itself at a substantially greater imaging scale than the one position detector (23) and appears to be arranged spaced at a substantially increased spacing in beam direction from the one position detector (23) by comparison with the geometric length difference of the beam paths from the splitter mirror to the position detectors (23, 25).

2. Device according to claim 1, characterised thereby, that the optical system (21) is arranged in front of the splitter mirror (22).

3. Device according to claim 1 or 2, characterised thereby, that the optical system (21) is cemented together with the splitting mirror (22), the deflecting mirror (24) and the position detectors (23, 25) into a compact optical glass system.

4. Device according to one of the preceding claims, characterised thereby, that the radiation transmitter (S) is equipped for so emitting two substantially parallelly focussed reference beams (Rₚ, Rₛ) at a mutual acute angle (α) towards the object that both reference beams (Rₚ, Rₛ) enter into the position detectors (23, 25).

5. Device according to claim 4, characterised thereby, that the radiation transmitter (S) is equipped for emitting both the reference beams (Rₚ, Rₛ) alternately.

## Revendications

1. Dispositif pour déterminer la position relative d'un axe de référence (BA) d'un objet par rapport à un faisceau de référence localisé parallèle (Rₚ), fixe dans l'espace et dirigé sur cet objet, d'un rayonnement électromagnétique, notamment d'un faisceau laser, comportant
a) un émetteur de rayonnement fixe dans l'espace pour le faisceau de référence (Rₚ),
b) un dispositif de détection de position, qui peut être fixé sur l'objet et qui comporte deux détecteurs optoélectroniques de position (23,25), qui comportent deux axes et sont associés respectivement à un autre de deux postes de mesure, qui sont situés au moins virtuellement dans la direction de propagation du faisceau de référence (Rₚ), à distance l'un derrière l'autre, sur l'objet et délivrent des signaux électriques, qui correspondent à la valeur et au signe de coordonnées (x,y,x',y'), qui sont perpendiculaires entre elles, de la distance séparant, dans le plan respectif du détecteur, le point d'impact (A.A') du faisceau de référence (Rₚ) d'un point de référence situé dans ce plan, et
c) un dispositif de traitement électronique des données (3, 4), qui est associé à l'un des deux détecteurs de position (23,25) et sert à calculer la position relative de l'axe de référence (BA) de l'objet par rapport à l'axe médian du faisceau de référence (Rₚ), à partir des signaux délivrés par les détecteurs de position (23,25),
d) dans le trajet du rayonnement du faisceau de référence (Rₚ) est disposé un miroir diviseur (22), qui est fixe par rapport aux détecteurs de position (23,25) et, à partir du faisceau de référence (Rₚ) qui se prolonge en ligne droite jusqu'à un détecteur de position (23), dérive un faisceau partiel (Rₚ') qui est dirigé vers l'autre détecteur de position (25), et un dispositif optique (21) est monté fixe dans le trajet du rayonnement entre l'émetteur du rayonnement (S) et l'autre détecteur de position (25), sur le dispositif de détection de position,
caractérisé par le fait que
e) les détecteurs de position (23,25) sont disposés de telle sorte que leurs plans de détection sont situés côte-à-côte essentiellement dans le même plan,
f) le faisceau partiel dérivé (Rₚ') est réfléchi tout d'abord latéralement par le miroir diviseur (22) avec une composante dirigée en sens opposé du sens du faisceau de référence arrivant (Rₚ), et est renvoyé ensuite par réflexion à l'autre détecteur de position (25), au moyen d'un miroir de renvoi (24) fixe par rapport aux détecteurs de position (23,25), et
g) le système optique est agencé de telle sorte que l'autre détecteur de position (25) fournit, lorsqu'on regarde à partir de l'émetteur de rayonnement, une représentation avec une échelle de grandissement nettement supérieure à celle du premier détecteur de position (23) et apparaît être disposé dans la direction du rayonnement en étant séparé du premier détecteur de position (23) par une distance nettement accrue par rapport à la différence de longueur géométrique des trajets des faisceaux depuis le miroir diviseur jusqu'aux détecteurs de position (23,25).

2. Dispositif suivant la revendication 1, caractérisé par le fait que le système optique (21) est disposé devant le miroir diviseur (22).

3. Dispositif suivant la revendication 1 ou 2, caractérisé par le fait que le système optique (21) ainsi que le miroir diviseur (22), le miroir de renvoi (24) et les détecteurs de position (23,25) sont réunis par collage pour former un système optique en verre compact.

4. Dispositif suivant l'une des revendications précédentes, caractérisé par le fait que l'émetteur de rayonnement (S) est agencé pour émettre deux faisceaux de référence (Rₚ,Rₛ) focalisés sensiblement parallèlement et faisant entre eux un angle aigu (α), en direction de l'objet de telle sorte que les deux faisceaux de référence (Rₚ, Rₛ) tombent sur les détecteurs de position (23,25).

5. Dispositif suivant la revendication 4, caractérisé par le fait que l'émetteur de rayonnement (S) est agencé de manière à émettre alternativement les deux faisceaux de référence (Rₚ,Rₛ).
